Europäisches Patentamt

European Patent Office

Office européen des brevets

(11) Numéro de publication: **0 394 729**

**A2**

(12) # DEMANDE DE BREVET EUROPEEN

(21) Numéro de dépôt: **90106702.5**

(22) Date de dépôt: **07.04.90**

(51) Int. Cl.5: **C05F 17/02, F26B 3/28, F26B 9/06**

(30) Priorité: **13.04.89 CH 1402/89**

(43) Date de publication de la demande:
**31.10.90 Bulletin 90/44**

(84) Etats contractants désignés:
**AT BE CH DE DK ES FR LI LU NL**

(71) Demandeur: **Gavillet, Gérard**
**Laiterie**
**CH-1634 La Roche(CH)**

Demandeur: **Aimonetti, André Lucien**
**Pré du Grenier**
**CH-1649 Pont-la-Ville(CH)**

(72) Inventeur: **Gavillet, Gérard**
**Laiterie**
**CH-1634 La Roche(CH)**
Inventeur: **Aimonetti, André Lucien**
**Pré du Grenier**
**CH-1649 Pont-la-Ville(CH)**

(74) Mandataire: **Blum, Rudolf Emil Ernst et al**
**c/o E. Blum & Co Patentanwälte Vorderberg**
**11**
**CH-8044 Zürich(CH)**

(54) **Procédé et enceinte pour le séchage de matière organique.**

(57) La matière à sécher (8) est enfermée dans une enceinte fermée (1) dont le plafond translucide (4) laisse passer le rayonnement thermique et arrête les ultraviolets. Le hublot d'aération (7) restant fermé, la fermentation et l'échange d'air très réduit entre l'extérieur et l'intérieur de l'enceinte échauffe ce dernier et provoque l'évaporation de l'humidité contenue dans la matière (8). La vapeur produite se condense à l'intérieur (5) du plafond en ogive (4), s'écoule le long de celui-ci et est captée par une gouttière d'évacuation (6) qui déverse le liquide hors de l'enceinte.

La présente invention se rapporte à un procédé pour le séchage de matière organique, en particulier pour la production d'un engrais, ainsi qu'à une enceinte pour la réalisation du procédé. Les problèmes que posent l'utilisation comme engrais de matières organiques trop liquides, tels les excréments de porc, sont bien connus : difficultés de transport et d'épandage, surtout en terrain vallonné, odeur désagréable, valeurs pH trop basses pour certaines cultures, etc.

Il existe de nombreux procédés visant à sécher efficacement de telles matières organiques. Certains de ces procédés requièrent une trop grande quantité de matière sèche, tel de la tourbe, d'autre, tel celui décrit dans la demande de brevet N°4380/87-0 (Brevet Suisse No. 672634) exigent un apport d'énergie - en général thermique - non négligeable et/ou un appareillage dont le coût ne se justifie pas dans tous les cas.

La présente invention vise à remédier à ces inconvénients. A cet effet, elle est définie comme il est dit aux revendications 1 et 7.

Le procédé n'exige ni apport artificiel d'énergie ni appareillage d'aucune sorte, si ce n'est un bâtiment fort rustique. Il délivre un produit final très sec et inodore, même quand les matières organiques utilisées contiennent par exemple une forte proportion de fumier de porc. De plus, le liquide extrait de la matière organique par le présent procédé se présente sous forme d'une eau pratiquement distillée, qui peut être évacuée sans créer aucune nuisance.

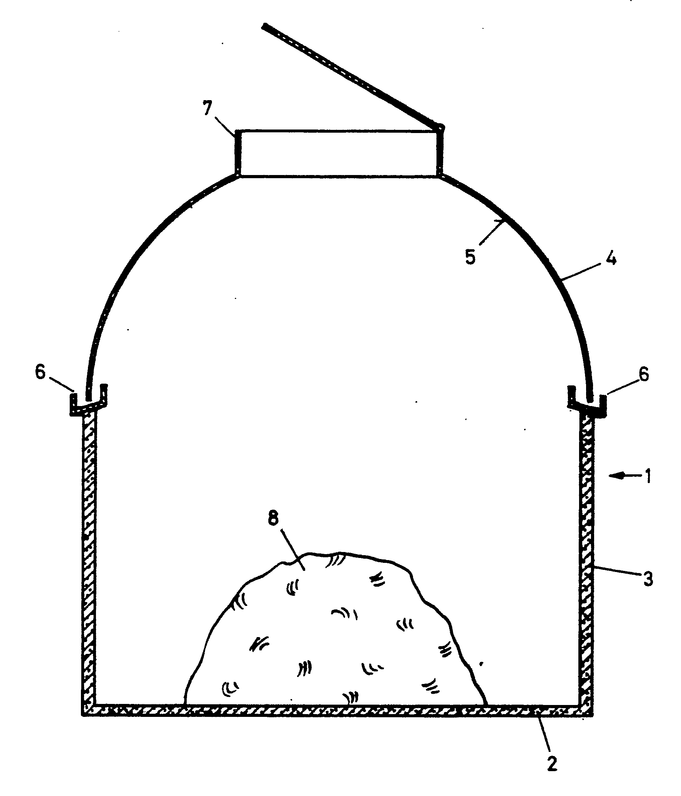

L'invention sera maintenant illustrée par la description d'un mode de réalisation et à l'aide du dessin, dont la figure unique montre la coupe schématique d'une enceinte pour la mise en oeuvre du procédé selon l'invention.

L'unique figure représente une coupe schématique à travers une enceinte appropriée à la réalisation de l'invention. Cette enceinte 1 a la forme générale d'un tunnel de longueur quelconque et dont le gabarit permet d'y introduire un véhicule utilitaire, tel un petit camion à ridelles, etc. Sur un sol 2, de préférence bétonné ou goudronné, sont érigées deux parois 3 qui peuvent être des murs traditionnels, ou encore réalisées en fibro-ciment. Ces parois sont surmontées d'une voûte 4 transparente ou translucide, laissant passer le rayonnement infrarouge ainsi que la plus grande partie du rayonnement visible, mais essentiellement opaque dans l'ultraviolet. Cette voûte, qui devra de préférence assurer une bonne isolation thermique, peut par exemple être réalisée par des panneaux sandwich bialvéolaires en polycarbonate tels qu'ils se trouvent facilement sur le marché.

La surface intérieure 5 de la voûte possède une forme et une surface telles que les gouttes de liquide qui s'y forment par condensation de l'humidité régnant à l'intérieur de l'enceinte glissent vers le bas le long de la voûte sous l'effet de la pesanteur, et viennent s'écouler dans une gouttière 6 qui s'étend de chaque côté sur toute la longueur de l'enceinte, au-dessus des parois latérales 3. Une voûte en forme de demi-cylindre permet d'obtenir , à peu de frais, l'écoulement désiré, mais d'autres formes, en ogive ou même triangulaire à faîtage rectiligne sont possibles. La gouttière 6 est inclinée latéralement et/ou longitudinalement de manière à ce que le liquide qui s'y accumule s'écoule vers l'extérieur de l'enceinte 1. Les ouvertures nécessaires au passage du liquide de l'intérieur vers l'extérieur sont suffisamment étranglées pour éviter un échange d'air appréciable entre l'intérieur et l'extérieur de l'enceinte par cette voie. En particulier, l'enceinte peut être close de manière pratiquement hermétique. La gouttière 6 se trouvera alors entièrement à l'intérieur de l'enceinte et se déversera dans une conduite fermée la reliant à l'extérieur.

La partie supérieure de la voûte comporte un ou plusieurs hublots d'aération 7 pouvant être fermés hermétiquement, et qui ne seront en général ouverts que lorsqu'il devient nécessaire d'aérer l'enceinte, par exemple pour des raisons d'hygiène lorsque du personnel travaille dans l'enceinte. Les autres ouvertures de l'enceinte, en général un portail à au moins une de ses extrémités, ferment également de manière suffisamment étanche pour éviter un échange d'air notable entre l'enceinte et l'extérieur, de façon à empêcher autant que possible tant les pertes de chaleur que la fuite des gaz dus à la fermentation.

Pour une réalisation du procédé selon l'invention, on amène dans l'enceinte, par exemple au moyen d'un véhicule pouvant y entrer entièrement ou partiellement, une quantité de matière organique à sécher, que l'on y entasse sous forme d'un endain 8. On ménagera de préférence des passages latéraux entre l'endain et les parois latérales 3. En général, il sera utile d'activer le compostage de l'endain en y injectant, de manière connue en soi, des souches de bactéries additionnelles de types sélectionnés. La voûte imperméable aux ultraviolets protégera les bactéries de ces rayons, qui leur sont en général nuisibles.

Ensuite, et en dehors de contrôles occasionnels de la température et de la fermentation ainsi que d'un brassage partiel de l'endain en cas de nécessité, l'enceinte reste fermée et ne requiert aucun apport artificiel d'énergie, ni pour le chauffage ni pour l'extraction ou l'évacuation du liquide contenu dans l'endain.

En effet, la chaleur due à la fermentation de la matière organique, intensifiée par le rayonnement thermique traversant la voûte, évapore l'humidité contenue dans la matière organique; la vapeur ainsi produite se condense à la surface intérieure de la voûte qui est refroidie par l'air ambiant. L'eau distillée produite par condensation s'écoule le long de cette surface intérieure, d'abord vers le bas, puis vers l'extérieur, ce qui assèche d'autant l'intérieur de l'enceinte. Comme celle-ci est hermétiquement fermée, les pertes de chaleur vers l'extérieur sont faibles. La température à l'intérieur de l'enceinte sera donc élevée, ce qui entraîne un séchage rapide de la matière organique, même si au départ celle-ci contient un pourcentage d'eau important.

## Revendications

1. Procédé pour le séchage de matière organique fermentable, caractérisé en ce qu'on l'enferme dans une enceinte qui restreint les pertes de chaleur par convexion de l'air entourant la masse organique, ainsi que l'échappement des gaz en formation, qu'on condense la vapeur émise dans cet air par échauffement, et qu'on évacue le liquide condensé vers l'extérieur de l'enceinte.

2. Procédé selon la revendication 1, caractérisé en ce qu'on laisse fermenter la matière sans apport d'énergie thermique artificielle.

3. Procédé selon une des revendications précédentes, caractérisé en ce qu'on utilise l'énergie thermique du rayonnement solaire pour activer la fermentation.

4. Procédé selon une des revendications précédentes, caractérisé en ce qu'on protège la matière organique du rayonnement ultraviolet ambiant et solaire en utilisant une enceinte essentiellement imperméable à ce rayonnement.

5. Procédé selon la revendication 4, caractérisé en ce qu'on condense la vapeur sur au moins une surface oblique ou cintrée servant à l'écoulement par gravitation du liquide condensé.

6. Procédé selon une des revendications précédentes, caractérisé en ce qu'on active la fermentation par addition de bactéries dans la matière organique et/ou par une réoxygénation de la matière par un retournement au moins partiel.

7. Enceinte fixe pour la réalisation du procédé selon la revendication 1, caractérisée en ce qu'elle est agencée pour être close de façon suffisamment étanche pour essentiellement empêcher les pertes de chaleur et de gaz en formation par échange d'air avec l'extérieur.

8. Enceinte selon la revendication 7, caractérisée en ce que son plafond est au moins partiellement translucide, et perméable au rayonnement thermique ambiant.

9. Enceinte selon la revendication 8, caractérisée en ce que le plafond de l'enceinte est formé par un sandwich en polycarbonate.

10. Enceinte selon une des revendications 7 à 9, caractérisée en ce que la majeure partie de la surface intérieure de son plafond est suffisamment inclinée et lisse pour provoquer l'écoulement par gravitation du liquide condensé sur cette surface.

11. Enceinte selon la revendication 10, caractérisée par au moins une gouttière pour capter le liquide s'écoulant de ladite surface et pour l'évacuer vers l'extérieur de l'enceinte.

12. Enceinte selon une des revendications 7 à 11, caractérisée en ce que sa section transversale est suffisante pour le passage d'un engin de transport routier.